Europäisches Patentamt

European Patent Office

Office européen des brevets

(19)

(11) Veröffentlichungsnummer: **0 200 201**

**A2**

(12) # EUROPÄISCHE PATENTANMELDUNG

(21) Anmeldenummer: 86105890.7

(22) Anmeldetag: 29.04.86

(51) Int. Cl.⁴: **B 23 B 31/12**
**B 23 B 51/00**

(30) Priorität: 30.04.85 DE 3515555

(43) Veröffentlichungstag der Anmeldung:
05.11.86 Patentblatt 86/45

(84) Benannte Vertragsstaaten:
CH DE FR GB IT LI

(71) Anmelder: GEBRÜDER HELLER GMBH
WERKZEUGFABRIK
Uphuser Heerstrasse 102
D-2807 Achim-Uphusen(DE)

(72) Erfinder: Kleine, Werner, Dipl.-Ing., Dipl.-Wirtsch
An der Marsch 29
D-2807 Achim-Uesen(DE)

(74) Vertreter: Patentanwälte Phys. Bartels Dipl.-Ing. Fink
Dr.-Ing. Held
Lange Strasse 51
D-7000 Stuttgart 1(DE)

(54) Werkzeugaufnahme für Bohrmaschinen, Bohrvorrichtung sowie Bohrer und Bohrersatz.

(57) Die als Mehrbackenfutter ausgebildete Werkzeugaufnahme hat eine zylindrische Bohrung 326, in die bei maximalem Öffnen der Aufnahme die Backen 322 eingreifen, oder der Mitnehmer jeder Backe hat eine dem Hohlraum der Aufnahme zugekehrte Stirnfläche 416, die durch eine sich axial erstreckende Rippe 320 unterbrochen ist.

Die Bohrvorrichtung weist eine als Mehrbackenfutter ausgebildete Werkzeugaufnahme und einen Bohrer auf, dessen Einspannschaft im Hohlraum der Aufnahme axial geführt ist und für den Eingriff von radial inneren Teilen der Backen des Mehrbackenfutters Nuten aufweist.

Der Bohrer weist in seinem Einspannschaft für den Eingriff der Backen eines Mehrbackenfutters axial verlaufende Nuten auf, in deren Boden eine Rille vorbanden ist, oder von denen mindestens eine in einem Abstand von der hinteren Stirnfläche endet und mit dieser Stirnfläche durch eine Einführnut verbunden ist, deren Querschnitt kleiner ist als der Querschnitt der Nut.

Der Bohrersatz besteht aus Bohrern mit verschieden dicken Einspannschäften. Die dickeren Einspannschäfte weisen mindestens zwei sich axial erstreckende Nuten für den Eingriff der Backen und die dünneren Einspannschäfte zu ihrer Achse nicht koaxiale Anlageflächen 416 für die Anlage an die Backen 322 eines Mehrbackenfutters auf.

Fig. 6

European Patent Attorneys

Phys. F.Bartels
Dipl.-Ing. H.Dub
Dr.-Ing. M.Held

0200201

Patentanwälte     Lange Straße 51     D-7000 Stuttgart 1

Zugelassene Vertreter
beim Europäischen Patentamt

26.April 1985
7508rlh
Reg.-Nr. 126 870

GEBRÜDER HELLER GMBH WERKZEUGFABRIK, Uphuser Heerstr. 102,
                                     2801 Achim-Uphusen

Werkzeugaufnahme für Bohrmaschinen, Bohrvorrichtung sowie
Bohrer und Bohrersatz.

Die Erfindung betrifft das Gebiet des Bohrens, insbesondere
des Gesteinbohrens, mit Hilfe von Bohrmaschinen, insbesondere
Bohrhämmern. Beim Bohren von Bohrungen mit verschiedenen
Durchmessern müssen Bohrer mit verschiedenen Durchmessern
verwendet werden, die möglichst in ein und derselben Werkzeugaufnahme mit ihren verschiedenen Einspannschäften einspannbar
sind.Hierbei tritt das Problem auf, daß trotz der verschiedenen Belastung der Werkzeugaufnahme beim Bohren von Bohrungen
mit verschiedenen Durchmessern die Bohrer immer einwandfrei
von der Werkzeugaufnahme mitgenommen werden und Störungen
nach Möglichkeit vermieden werden sollen. Bei Hammerbohrern
tritt noch das zusätzliche Problem auf, daß die Einspannschäfte der Bohrer, beim Ausüben der Schläge auf die Stirnfläche des Einspannschaftes in der Werkzeugaufnahme ohne
herausgestoßen zu werden, auch bei extrem dicken oder dünnen
Einspannschäften axial einwandfrei geführt sein sollten.

Telefon (07 11) 29 63 10 u 29 72 95
Telex 7 22 312 (patwo d)

Postscheck Stuttgart (BLZ 600 100 70) 72 11-700
Deutsche Bank Stuttgart (BLZ 600 700 70) 1428630

Telefonische Auskünfte und Aufträge sind
nur nach schriftlicher Bestätigung verbindlich

Durch die DE-OS 31 18 691 ist eine Werkzeugaufnahme für Bohrhämmer bekannt, die zum Einspannen verschieden dicker Einspannschäfte von Bohrern mindestens zwei Backen aufweist, für die ein Backenträger vorhanden ist, der mit einem Hohlraum zur Aufnahme der einzuspannenden Einspannschäfte versehen ist, in den beim Festspannen der Einspannschäfte die im Backenträger radial ein- und feststellbar gelagerten Backen mit ihren Mitnehmern eingreifen.

Die Erfindung befaßt sich zunächst damit, eine Werkzeugaufnahme dieser Art so auszubilden, daß sie das eingangs genannte Problem auch für Bohrer mit dicken Bohrerschäften löst.

Gemäß der Erfindung ist vorgesehen, daß der Hohlraum des Backenträgers zylindrisch ist und daß beim maximalen Öffnen der Werkzeugaufnahme zur Aufnahme von Einspannschäften, deren Durchmesser dem Durchmesser des Backenträgerhohlraumes entspricht, die radial inneren Teile der Mitnehmer in diesen Hohlraum eingreifen. Dadurch ist eine einwandfreie Führung der für die Werkzeugaufnahme vorgesehenen dicksten Bohrerschäfte durch die zylindrische Wandung des Hohlraumes gewährleistet, wenn hierzu Bohrer mit einem Einspannschaft verwendet werden, der mindestens zwei axial verlaufende Nuten für den formschlüssigen Eingriff der Mitnehmer der Werkzeugaufnahme aufweist, von denen mindestens eine Nut in einem Abstand von der hinteren Stirnfläche des Einspannschaftes endet und mit dieser Stirnfläche durch eine Einführnut verbunden ist, deren Querschnitt kleiner, vorzugsweise flacher ist als der Querschnitt der Nut. Man muß jetzt nur vorsehen, daß bei maximal geöffneter Werkzeugaufnahme die Backen nur so tief in den Backenträgerhohlraum eingreifen, daß zum Einsetzen des Einspannschaftes in die Werkzeugaufnahme der Querschnitt der Einführnut den Querschnitt des in den Hohlraum eingreifenden Backenteiles umfaßt. Dadurch ist gleichzeitig gewährleistet, daß der Bohrerschaft in die Werkzeugaufnahme nur in einer Stellung eingeführt werden kann, in der die Backen der Werkzeugaufnahme genau auf die Nuten des Einspannschaftes ausgerichtet sind.

Ein so ausgebildeter Bohrer bildet mit der erfindungsgemäßen Werkzeugaufnahme eine erfindungsgemäße Bohrvorrichtung, bei der der Bohrer in der Werkzeugaufnahme durch die zylindrische Wandung des Hohlraumes einwandfrei geführt ist, wobei der Außenumfang der Werkzeugaufnahme durch den Eingriff der Backen bei maximal geöffneter Werkzeugaufnahme auf ein Mindestmaß begrenzt ist.

Dieser Außenumfang von Werkzeugaufnahmen für Bohrmaschinen sollte einen bestimmten Durchmesser, z.B. von 43 mm, nicht überschreiten, da z.B. die Bohrhämmer hinter dem Futter einen Spannhals haben, der z.B. zum Befestigen des vorderen Handgriffes des Bohrhammers oder zum Spannen in Bohrständern oder für andere Vorsatzgeräte genormt ist.

Die Erfindung besteht weiterhin auch darin, die eingangs genannte Werkzeugaufnahme für Bohrmaschinen so auszubilden, daß sie das eingangs genannte Problem auch für Bohrer mit dünnen und allerdünnsten Einspannschäften löst. Diese Aufgabe ist gemäß der Erfindung dadurch gelöst, daß der Mitnehmer jeder Backe eine dem Hohlraum des Backenträgers zugekehrte Stirnfläche aufweist, die durch eine sich axial zur Hohlraumachse erstreckende Rippe unterbrochen ist. Dadurch wird erreicht, daß bei Bohrern mit dickeren Einspannschäften die Nuten für den Eingriff der radial inneren Teile der Backen ausgebildet werden können und daß bei Bohrern mit dünnen Einspannschäften die Nuten nur zur Aufnahme der Rippen vorgesehen sind. Bei Bohrern mit dünnen Einspannschäften, bei denen die zu übertragenden Drehmomente klein sind, genügt dann die kleine Nut für den Eingriff der Rippe der Backe, während mit zunehmendem Durchmesser des Einspannschaftes die Nuten für den Eingriff der Backen immer tiefer werden können, so daß nicht nur die Rippen, sondern vor allem auch die radial inneren Teile der Backen selbst Mitnehmer bilden.

Die oben genannten beiden erfindungsgemäßen Ausbildungen
der Werkzeugaufnahme für dickste und dünne Einspannschäfte
können erfindungsgemäß auch in einer Werkzeugaufnahme vereinigt sein, so daß dadurch das eingangs genannte Problem
in einer besonders vorteilhaften Weise für alle Durchmesser
der Bohrerschäfte einwandfrei gelöst ist.

Bei einer vorteilhaften Ausführungsform der erfindungsgemäßen
Ausbildungen der Werkzeugaufnahme kann vorgesehen sein,
daß die Flanken einer jeden Backe einen Winkel von 360° : n,
z.B. 120°, miteinander bilden, wenn n die Anzahl der Backen,
z.B. drei, ist, und daß die Backen bis zur Anlage der Flanken
aneinander ein- und feststellbar sind. Dadurch wird erreicht,
daß beim Festspannen der dünnsten Einspannschäfte die am
tiefsten in den Hohlraum des Backenhalters eingreifenden
Backen mit ihren Flanken aneinanderliegen, so daß durch
dieses Merkmal eine weitere Stabilisierung der Verbindung
zwischen Bohrer und Werkzeugaufnahme erreicht wird.

Die erfindungsgemäße Ausbildung der Werkzeugaufnahme bildet
zusammen mit einem Bohrer eine erfindungsgemäße Bohrvorrichtung, wenn der Einspannschaft des Bohrers einen kleineren
Durchmesser hat als der Durchmesser des Hohlraumes des Backenhalters und jede Backe des Backenhalters eine dem Hohlraum
des Backenhalters zugekehrte Stirnfläche aufweist und wenn
am Einspannschaft Anlageflächen für die flächige Anlage
der Stirnfläche der Backen durch Verformung des ursprünglich
zylindrischen Einspannschaftes gebildet sind.

Da die Stirnflächen der Backen sich beim Einspannen der
Einspannschäfte mit verschiedenen Durchmessern nicht verändern,
verändern sich auch nicht die diesen Stirnflächen angepaßten

- 5 -

Anlageflächen der Bohrerschäfte. Das hat zur Folge, daß
die dünneren Bohrer keine Nuten für den Eingriff der Backen
benötigen, weil die zur Bohrerachse nicht konzentrischen
Stirn- und Anlageflächen eine Übertragung des Drehmomentes
von der Werkzeugaufnahme auf den Bohrer gewährleisten, ohne
daß, wie gesagt, der Einspannschaft durch Nuten geschwächt
wird, was bei extrem dünnen Einspannschäften besonders wichtig
ist.

Bei den dickeren Einspannschäften ist es natürlich zweckmäßig,
Nuten für den Eingriff der Backen vorzusehen.

Bei einer vorteilhaften Ausführungsform eines solchen Bohrers
ist vorgesehen, daß mindestens die beim Bohren das Drehmoment
der Werkzeugaufnahme aufnehmende Seitenwand jeder Nut in
einer Radialebene des Einspannschaftes liegt oder gegenüber
dieser um ihre radial äußere Begrenzung in einer der Umlaufrichtung des Bohrers entgegengesetzten Drehrichtung geneigt
ist. Dadurch wird erreicht, daß durch das Übertragen des
Drehmomentes von der Werkzeugaufnahme auf den Bohrer keine
radialen Kräfte auf die Backen ausgeübt werden, durch die
besonders bei dickeren Einspannschäften die Backen aus dem
Eingriff mit den Nuten der Einspannschäfte herausgedrückt
werden könnten.

Werden die oben genannten erfinderischen Merkmale der Werkzeugaufnahmen in einer Werkzeugaufnahme zusammengefaßt, dann
ergibt sich für eine solche Werkzeugaufnahme ein erfinderischer Satz von Bohrern mit verschieden dicken Einspannschäften, der dadurch gekennzeichnet ist, daß die dickeren Einspannschäfte mindestens zwei sich axial erstreckende Nuten
für den Eingriff von Mitnehmern der Werkzeugaufnahme aufweisen
und daß die dünneren Einspannschäfte mit zur Achse der Einspannschäfte nicht konzentrischen Anlageflächen versehen sind. Dadurch wird erreicht, daß bei den dicken Einspannschäften, die durch Nuten nur unwesentlich geschwächt werden,
eine Mitnahme durch den Eingriff der Backen erreicht wird,
wobei dieser Eingriff durch Vertiefung der Nuten bei dickeren
Einspannschäften den jeweiligen Anforderungen angepaßt werden
kann. Bei den dünnen Einspannschäften ist jedoch eine Nut
nicht unbedingt erforderlich, da durch Anformung der zur
Achse der Einspannschäfte nicht konzentrischen Anlageflächen
eine Mitnahme gewährleistet ist, wenn diese Anlageflächen
den Stirnflächen der Backen der Werkzeugaufnahme so angepaßt
sind, daß sie flächig aneinanderliegen.

Die dünnen Bohrer wären dann allerdings nicht für Bohrhämmer
geeignet. Bei Verwendung von erfindungsgemäßen, für Bohrhämmer
geeigneten Werkzeugaufnahmen, bei denen die Stirnflächen
der Backen durch eine sich axial zur Hohlraumachse erstreckende Rippe unterbrochen sind, kann die Mitnahme der dünneren
Bohrer dadurch erreicht werden, daß in den Einspannschäften
dieser die Nuten den etwa gleichen Querschnitt haben wie
die Rippen der Backen, so daß die Rippen in die Nuten eingreifen. Hierbei ist eine flächige Anlage der Anlageflächen
an die Stirnflächen der Backen nicht mehr unbedingt erforderlich, jedoch vorteilhaft.

Die Erfindung ist in der folgenden Beschreibung von Ausführungsbeispielen im einzelnen erläutert.

0200201

- 7 -

Es zeigen:

Fig. 1 — eine Seitenansicht des den Einspannschaft enthaltenden Teiles eines
Bohrers;

Fig. 2 — eine der Darstellung nach Fig.1
entsprechende Darstellung eines
abgewandelten Ausführungsbeispiels
eines Bohrers für ein- und dasselbe
Dreibackenfutter;

Fig. 3 — einen Schnitt nach der Linie
III - III in Fig.2, wobei in
diesem Schnitt ein Teil einer
Backe eines erfindungsgemäßen
Dreibackenfutters strichpunktiert
dargestellt ist;

Fig. 4 und 5 — einen der Fig.3 entsprechenden
Schnitt, in denen zwei verschiedene
Teile einer Backe von zwei erfindungsgemäßen Mehrbackenfuttern
strichpunktiert dargestellt sind;

Fig. 6 und 7 — schematisch vereinfacht dargestellte
Querschnitte eines Dreibackenfutters
mit eingespannten Einspannschäften
verschiedenen Durchmessers, wobei
der Backenträger des Dreibackenfutters nur schematisch in Ansicht
dargestellt ist.

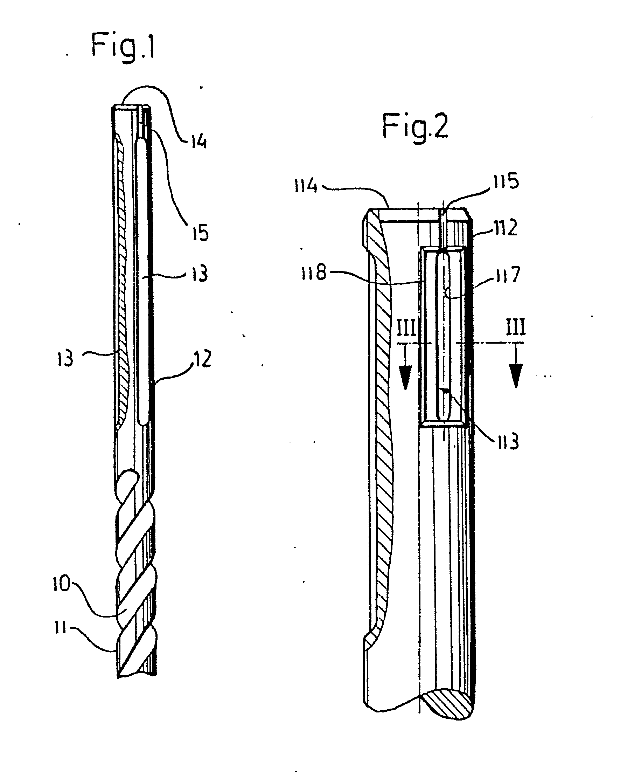

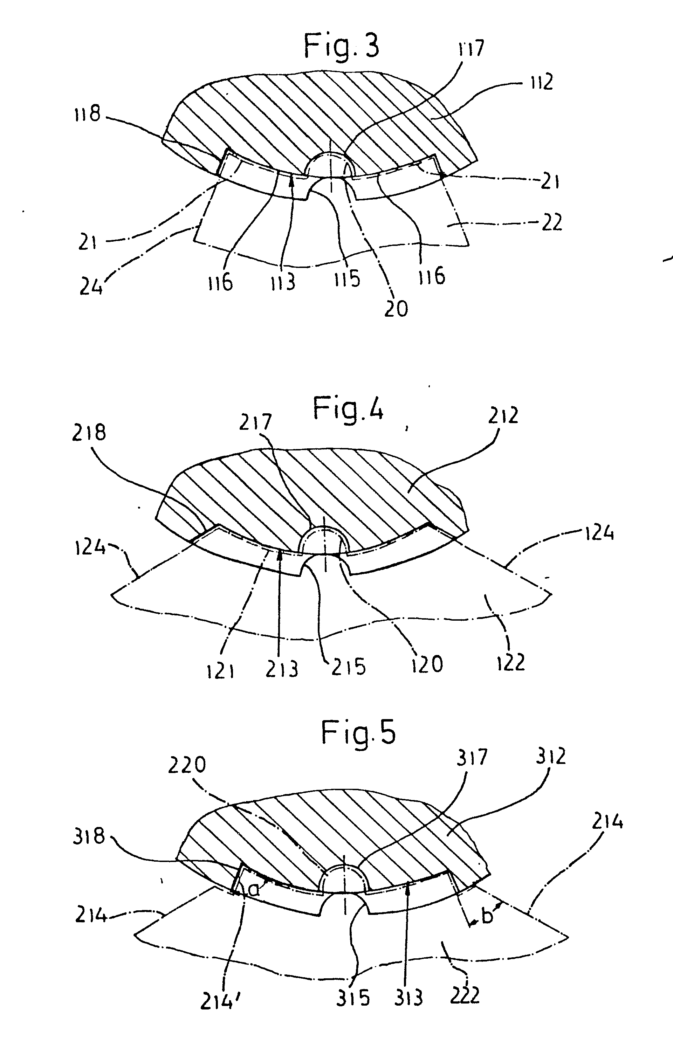

Der in Fig.1 dargestellte Bohrer für einen Bohrhammer besteht aus einem Arbeitsschaft 11, der die in der Zeichnung nicht dargestellte Schneide und eine Abführnut 10 aufweist, und einem Einspannschaft 12, dessen Außendurchmesser dem Außendurchmesser des Arbeitsschaftes 11 angepaßt ist. Der Einspannschaft weist drei gerade, sich axial erstreckende und in gleichem Winkelabstand voneinander angeordnete Nuten 13 auf. Jede Nut 13 ist für den Eingriff einer Rippe 20 vorgesehen, die aus einer Stirnfläche 21 einer radial verstellbaren Backe 22 eines Dreibackenfutters radial vorsteht und sich axial erstreckt (siehe Fig.3). Die Nuten 13 erstrecken sich nur über einen Teil der Länge des Einspannschaftes 12, so daß sich ihre hinteren Enden in einem Abstand von der hinteren Stirnfläche 14 des Einspannschaftes 12 befinden. Jede Nut 13 ist mit der hinteren Stirnfläche 14 durch eine Einführnut 15 verbunden, deren Querschnitt kleiner ist als der Querschnitt der Nut 13 aber noch so groß, daß der radial innere Teil der Rippe 20 in die Einführnut eingreifen kann.

Dadurch wird erreicht, daß, wenn man die Backen 22 des Futters so einstellt, daß der radial innere Teil der Rippe in die Einführnut des Einspannschaftes 12 eingreift, der Einspannschaft nur in einer solchen Stellung in das Futter axial eingeführt werden kann, in der die Einführnuten 15 auf die Rippen 20 der Backen 22 ausgerichtet sind. Ist der Einspannschaft dann so tief in das Futter eingeführt, daß die Rippen 20 am vorderen Ende der Nuten 13 anstoßen, dann sind gleichzeitig die Rippen 20 auf die Nuten 13 ausgerichtet, so daß durch Festziehen des Futters die Rippen 20 einwandfrei in die Nuten 13 eingreifen und dadurch eine Zentrierung des Bohrers gewährleistet ist.

In Fig.2 ist der dicke Einspannschaft 112 eines Bohrers dargestellt, der für das gleiche Dreibackenfutter nach Fig.3 vorgesehen ist wie der Bohrer nach Fig.1. Um das wesentlich größere Drehmoment auf den dickeren Einspannschaft 112 zu übertragen, sind in diesem Nuten 113 vorgesehen, die nicht nur zur Aufnahme der Rippe 20, sondern auch zur Aufnahme des radial inneren Teiles der Backen 22 vorgesehen sind, so daß dieser Teil der Backen Mitnehmer bildet. Im Boden dieser Nut 113, der eine Anlagefläche 116 für die Stirnfläche 21 der Backe 22 bildet, ist für den Eingriff der Rippe 20 eine Rille 117 vorgesehen, deren Querschnitt der Nut 13 des Ausführungsbeispiels nach Fig.1 entspricht. Die Nut 113 ist mit der hinteren Stirnfläche 114 des Einspannschaftes durch eine Einführnut 115 verbunden, die genau so lang ist wie die Einführnut 15. Die Nut 13 des dünnen Einspannschaftes ist jedoch wesentlich länger als die Nut 113 des dickeren Einspannschaftes. Dadurch wird erreicht, daß der Bohrer nach Fig.1 sowohl mit Dreibackenfuttern verwendbar ist, bei denen die Backen 22 ohne Axialverschiebung nur radial einstellbar sind, als auch mit solchen, bei denen beim radialen Verstellen der Backen 22 auf kleine Durchmesser die Backen gleichzeitig axial nach vorne wandern.

Beim Ausführungsbeispiel nach Fig.3 hat die Einführnut 115 etwa den gleichen Querschnitt wie die Rippe 20 und damit wie die Rille 117. Die Einführnut kann hier aber auch größer sein. Wesentlich ist lediglich, daß sie das Einführen der Backe in dem den Einspannschaft noch nicht festspannenden Zustand ermöglicht, so daß nach dem Festspannen des Einspannschaftes das hintere Ende der Nuten 113 einen Anschlag bildet, der ein Herausschleudern des Bohrers aus dem Futter verhindert.

Die beim Bohren das Drehmoment des Dreibackenfutters übertragende Flanke 24 der Backe 22 liegt bei der größten Öffnung des Dreibackenfutters im wesentlichen in einer Radialebene des Dreibackenfutters. Eine entsprechende
Neigung hat die anliegende Seitenwand 118 der Nut 113.
Dadurch wird beim Übertragen des Drehmomentes von den
Backen auf den Bohrer auf die Backen keine radiale Kraft
verursacht, die ein Herausdrücken der Backen aus der
Nut 113 verursachen könnte.

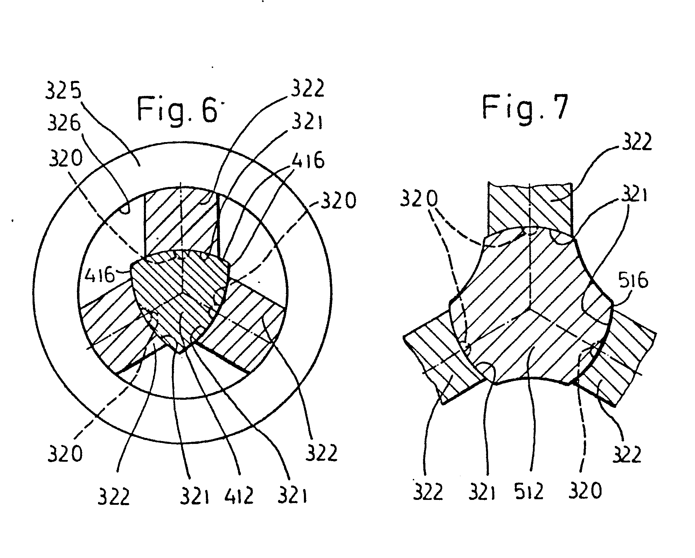

Die Stirnfläche 21 der Backe 22 ist zylindrisch. Ihr Krümmungsradius entspricht dem Krümmungsradius des dicksten Einspannschaftes 12, bei dem die Nut 13 nur für
den Eingriff der Rippe 20 vorgesehen ist. Dadurch wird
erreicht, daß bei den dünneren Bohrern die Rippe 20
immer voll in die Nut 13 eingreifen kann. Bei Einspannschäften nach den Fig. 6 und 7, wie das im folgenden
noch näher beschrieben werden wird, sind an die Einspannschäfte 412 und 512 Anlageflächen 416 bzw. 516 angeformt.
Dadurch wird bei dünneren Einspannschäften beim Übertragen
des Drehmomentes von dem Dreibackenfutter auf den Bohrer
eine die Backen radial nach außen drückende Kraft verursacht, die bei dem dicksten Einspannschaft 12 nicht
auftritt. Das hat den Vorteil,daß diese unvermeidliche,
die Backen radial nach außen drückende Kraft bei den
dünneren Einspannschäften 412 und 512 und damit bei
den dünneren Bohrern kleiner ist und leichter beherrscht
werden kann.

In Fig.4 ist ein abgewandeltes Ausführungsbeispiel sowohl
des Einspannschaftes 212 eines Bohrers als auch der Bakke 122 eines Dreibackenfutters dargestellt.
Bei diesem Ausführungsbeispiel unterscheidet sich die
Backe 122 von der Backe 22 nach Fig.3 dadurch, daß die
Flanken 124 jeder Backe 122 miteinander einen Winkel
von 120° bilden und daß das Dreibackenfutter so konstruiert ist, daß die Backen bis zur Anlage der Flanken 124
aneinander ein- und feststellbar sind. Dadurch wird
erreicht, daß bei ganz dünnen Einspannschäften, bei denen die Backen am weitesten in das Innere des Hohlraumes eines in der Zeichnung nicht dargestellten Backenhalters eingreifen, die Backen durch dieses Aneinanderliegen den eingespannten Einspannschaft eindeutig führen.
Hierbei ist zu beachten, daß bei einem Bohrhammer das
Einspannen kein Einklemmen bedeutet, da die Backen den
Einspannschaft nur zentrieren müssen, ihm aber eine
Axialbewegung ermöglichen sollen.

Wie das die Fig.4 zeigt, ergibt sich hierbei, daß die
Flanken 124 der Backen und damit die Seitenwände 218
der Nut 213 aller Einspannschäfte 212, die mit Nuten
213 für den Eingriff der radial inneren Teile der Backen
122 versehen sind, eine Neigung haben, die eine die
Backen radial nach außen drückende Kraft erzeugen.

- 11 -

- 11 -

Um dies zu verhindern, weist bei dem Ausführungsbeispiel
nach Fig.5 jede Backe 222 Flanken 214 auf, die gegeneinander um 120° geneigt sind. Der in die Nuten 313 des
Einspannschaftes 312 eingreifende, als Mitnehmer dienende,
radial innere Teil der Backen 222 weist jedoch Flanken 214'
auf, von denen die beim Antrieb des Bohrers das Drehmoment
übertragende Flanke 214' bei der größten Öffnung des
Dreibackenfutters gegenüber einer die inneren Begrenzungslinie des Mitnehmers enthaltenden Radialebene des Hohlraumes des in der Zeichnung nicht dargestellten Backenträgers in einer der Umlaufrichtung des Dreibackenfutters
entgegengesetzten Richtung geneigt ist. Dadurch sind
beim Ausführungsbeispiel nach Fig.5 die Vorteile des
Ausführungsbeispiels nach Fig.3 und des Ausführungsbeispiels nach Fig.4 gemeinsam vorhanden.

In den Fig. 6 und 7 ist rein schematisch dargestellt,
wie durch Verformung des Einspannschaftes 412 und 512
eines Bohrers bei gleichbleibender Ausbildung der Stirnflächen 321 der in einem Backenträger 325 radial ein-
und feststellbar gelagerten Backen 322 eines Dreibackenfutters das Drehmoment vom Dreibackenfutter auf den Einspannschaft übertragen werden kann, ohne daß im Einspannschaft
Nuten vorgesehen sind.

In Verbindung mit den in den Fig. 2 bis 5 dargestellten
Nuten 113,213 und 313 für den Eingriff des radial inneren
Mitnehmerteiles der Backen 22, 122 und 222 kann also
erreicht werden, daß mit ein und demselben Dreibackenfutter
dicke Einspannschäfte mit diesen Nuten versehen werden
und dünne Einspannschäfte lediglich durch Umformung nach
den Fig. 6 und 7 so geformt werden können, daß auch ohne
Nuten das Drehmoment übertragen werden kann, so daß in
einem solchen Fall auch die Rippen 20, 120 und 220 der
Ausführungsbeispiele nach den Fig. 3 bis 5 weggelassen
werden können, wenn das Futter nur für einfache oder

- 12-

für Schlagbohrmaschinen verwendet wird, bei denen der
Einspannschaft beim Einspannen fest in das Futter eingeklemmt wird.
Bei Bohrhämmern sind jedoch nach wie vor die in den Fig.6
und 7 gestrichelt eingezeichneten Rippen 320 erforderlich,
um durch den Anschlag an das hintere Ende der im Einspannschaft hierzu erforderlichen, den Nuten 13 nach Fig.1 entsprechenden Nuten ein Herausschleudern des axial verschiebbar eingespannten Bohrers durch die Schläge des Hammers
oder Schlägers zu verhindern.

Damit ergibt sich also für ein entsprechend ausgebildetes
Dreibackenfutter ein Bohrersatz, bei dem die dickeren
Einspannschäfte drei sich axial erstreckende Nuten 113,
213 oder 313 für den Eingriff von Mitnehmern des Dreibakkenfutters aufweisen und bei dem die dünneren Einspannschäfte mit zur Achse der Einspannschäfte nicht konzentrischen Anlageflächen 416 bzw. 516 versehen sind. Bei einer
Ausführungsform ohne Rippen 320 müßten diese Anlageflächen
416, 516 der immer gleichbleibenden Stirnfläche 321 der
Backen 322 angepaßt sein, was bei Einspannschäften mit
Rippen 320 nicht notwendig wäre.

Durch die Verwendung der Nuten 113, 213 oder 313 nach
den Fig. 3 bis 5 kann eine besonders vorteilhafte Ausführungsform für die dicksten Einspannschäfte vorgesehen
sein. Bei den bekannten Dreibackenfuttern sind die Backen
22,122,222,322 in einem nur in Fig.6 schematisch angedeuteten
Backenhalter 325 geführt, der eine Bohrung 326 aufweist,
in die die Einspannschäfte 12,112,212,312,412,512 der
Bohrer einführbar sind und in der die Einspannschäfte
dann durch die Backen 22,122,222,322 festgespannt werden.
Man hat nun die Möglichkeit, vorzusehen, daß die Bohrung
326 zylindrisch ist und die Backen bei der größten Öffnung
des Dreibackenfutters ganz aus dem Hohlraum herausgezogen
werden, so daß in den Hohlraum ein Einspannschaft eingeführt werden kann, dessen Durchmesser so dem Innendurchmesser des Hohlraumes entspricht, daß er durch diesen
Innenhohlraum axial geführt wird. Beim Einspannen dieses
Einspannschaftes werden dann die Backen in die Nuten
eingeführt.

Eine besonders vorteilhafte Möglichkeit ergibt sich dann,
wenn gleichzeitig mit den Nuten 113,213,313 zum Einführen
der radial inneren Teile der Backen auch Einführnuten 115,
215 oder 315 vorgesehen sind. Man hat dann die Möglichkeit,
den zylindrischen Hohlraum des Backenhalters des Dreibakkenfutters zur Führung des dicksten Einspannschaftes
zu benutzen ohne hierbei die Backen ganz aus dem Hohlraum
herauszuziehen. Dies ermöglicht es, das Dreibackenfutter
mit einem kleineren Außenumfang auszuführen, was die
einleitend genannten Vorteile ergibt. Die an dem Einspannschaft vorgesehenen Einführnuten ermöglichen es dann,
den Einspannschaft trotz seiner Führung durch die Wandung
und trotz der in den Hohlraum 326 eingreifenden Backen 322
dank der Einführnuten in das Dreibackenfutter einzuführen.

Wie das die Fig. 3 bis 5 zeigen, bilden die beiden Seitenwände 118, 218 und 318 der Nuten 113 bzw. 213 und 313 gleiche
Winkel miteinander. Damit nun bei den Bohrern verschiedener
Dicke die Backen immer möglichst spielfrei in diese Nuten
eingreifen, ist bei den Ausführungsbeispielen vorgesehen,
daß die Abstände der radial inneren Begrenzungen der
genannten Seitenwände voneinander bei allen diesen Bohrern
gleich groß sind.

Bei den bekannten Mehrbackenfuttern und damit auch bei
den hier beschriebenen Dreibackenfuttern, ist zum Ein-
und Feststellen der Backen 22, 122, 322 auf einen gewünschten Durchmesser ein manuell betätigbares Einstellglied vorgesehen. Um die Funktion der Einführnut möglichst
einfach zu realisieren, ist bei den dargestellten Ausführungsformen vorgesehen, daß am Backenhalter 325 Markierungen für solche Stellungen des in der Zeichnung nicht dargestellten Einstellgliedes vorhanden sind, in denen die Mitnehmer der Backen radial so tief in den Hohlraum 326 des Backenhalters 325 eingreifen, daß der gewünschte Einspannschaft 12, 112, 212 und 312 nur in einer Stellung in das Futter einführbar ist, in der für den Bohrer nach Fig.1 die als Mitnehmer dienende Rippe 20 oder bei den Bohrern mit dickeren Einspannschäften der durch den radial inneren Teil der Backen 22, 122, 222 gebildete Mitnehmer in die Einführnut 15, 115 eingreift.

Bei der Beschreibung des Ausführungsbeispiels nach Fig.3 ist ausgeführt worden, daß die das Drehmoment des Dreibackenfutters übertragende Flanke 24 der Backe 22 bei der größten Öffnung des Dreibackenfutters im wesentlichen in einer Radialebene des Dreibackenfutters liegt. Dies ist eine vorteilhafte Ausführungsform. Dieses Merkmal ist jedoch nicht zwingend, da beim Antrieb des Bohrers durch die Belastung zwischen der Seitenwand 118 und der Flanke 24 (der Nut 113 bzw. der Backe 22) eine Reibungskraft verursacht wird, die auch bei einer ungünstigen Neigung ein Herausdrücken der Backe 22 verhindern kann. Wichtig ist hierbei lediglich, daß die das Drehmoment der Werkzeugaufnahme auf den Bohrer übertragende Flanke 24 bei den verschiedenen Öffnungen der Werkzeugaufnahme gegenüber der jeweils unmittelbar benachbarten Radialebene des Backenträgerhohlraumes 326 (Fig.6) so geneigt ist, daß die gegebenenfalls auftretenden, auf die Backen radial nach außen wirkenden Radialkräfte höchstens so groß sind, wie die Reibungskräfte zwischen den Flanken 24 der Backen und den Seitenwänden 118 der Nuten 113.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

0200201

- I -

<u>P a t e n t a n s p r ü c h e</u>

1. Werkzeugaufnahme für Bohrmaschinen, die zum Einspannen
   verschieden dicker Einspannschäfte (12,112,212,312,412,
   512) von Bohrern mindestens zwei Backen (22,122,222,
   322) aufweist, für die ein Backenträger (325) vorhanden
   ist, der mit einem Hohlraum (326) zur Aufnahme der
   einzuspannenden Einspannschäfte versehen ist, in den
   beim Festspannen der Einspannschäfte die im Backenträger
   radial ein- und feststellbar gelagerten Backen mit
   ihren Mitnehmern eingreifen, dadurch gekennzeichnet,
   daß der Hohlraum (326) zylindrisch ist und daß beim
   maximalen Öffnen der Werkzeugaufnahme zur Aufnahme
   von Einspannschäften, deren Durchmesser dem Durchmesser
   des Hohlraumes entspricht, die radial inneren Teile
   der Mitnehmer in diesen Hohlraum eingreifen.

2. Werkzeugaufnahme für Bohrmaschinen, die zum Einspannen
   verschieden dicker Einspannschäfte (12,112,212,312,
   412,512)von Bohrern mindestens zwei Backen (22,122,
   222,322) aufweist, für die ein Backenträger (325)
   vorhanden ist, der mit einem Hohlraum (326) zur Aufnahme
   der einzuspannenden Einspannschäfte versehen ist,
   in den beim Festspannen der Einspannschäfte die im
   Backenträger radial ein- und feststellbar gelagerten
   Backen mit ihren Mitnehmern eingreifen, dadurch gekennzeichnet, daß der Mitnehmer jeder Backe eine dem Hohlraum des Backenträgers zugekehrte Stirnfläche (21,
   121,321) aufweist, die durch eine sich axial zur Hohlraumachse erstreckende Rippe (20,120,220,320) unterbrochen ist.

3. Werkzeugaufnahme nach Anspruch 1 oder 2, dadurch gekennzeichnet, daß die beim Antrieb eines Bohrers das Drehmoment der Werkzeugaufnahme übertragende Flanke (24, 124, 214') der Mitnehmer bei den verschiedenen Öffnungen der Werkzeugaufnahme gegenüber der jeweils unmittelbar benachbarten Radialebene des Backenträgerhohlraumes (326) so geneigt ist, daß die gegebenenfalls auftretenden, radialnach außen wirkenden Radialkräfte höchstens so groß sind wie die Reibungskräfte zwischen den Flanken (24, 124 214') der Backen und den Seitenwänden (118, 218, 318) der Nuten (113, 213, 313).

4. Werkzeugaufnahme nach Anspruch 3, dadurch gekennzeichnet, daß die beim Antrieb des Bohrers das Drehmoment der Werkzeugaufnahme übertragende Flanke (24, 124, 214') der Mitnehmer bei der größten Öffnung der Werkzeugaufnahme im wesentlichen in einer Radialebene des Hohlraumes (326) liegt.

5. Werkzeugaufnahme nach einem der Ansprüche 1 bis 4, dadurch gekennzeichnet, daß die Flanken (124, 214) einer jeden Backe (122,222) einen Winkel von 360° : n miteinander bilden, wenn n die Anzahl der Backen ist, und daß die Backen bis zur Anlage der Flanken aneinander ein- und feststellbar sind.

6. Werkzeugaufnahme nach einem der Ansprüche 1 bis 5, dadurch gekennzeichnet, daß für ein Einstellglied zum manuellen Einstellen der Backen (22, 122, 222, 322) auf einen gewünschten Durchmesser von Einspannschäften (112, 212, 312), am Backenhalter Markierungen für solche Stellungen des Einstellgliedes vorhanden sind, in denen die Mitnehmer der Backen radial so tief in den Hohlraum (326) des Backenhalters (325) eingreifen, daß der gewünschte Einspannschaft nur in einer Stellung in die Werkzeugaufnahme einführbar ist.

7. Bohrvorrichtung, die eine Werkzeugaufnahme mit einem Backenträger (325) und einem Bohrer aufweist, dessen Einspannschaft im Hohlraum (326) des Backenhalters (325) durch Backen einspannbar ist, die im Backenhalter radial ein- und feststellbar gelagert sind, dadurch gekennzeichnet, daß der Hohlraum (326) und der Einspannschaft eine zylindrische Umfangsfläche aufweisen, deren Durchmesser dem Durchmesser des Hohlraumes so angepaßt ist, daß der Hohlraum eine Axialführung für den Einspannschaft bildet, und daß im Einspannschaft Nuten für den Eingriff von radial inneren Teilen der Backen vorhanden sind.

8. Bohrvorrichtung nach Anspruch 7, dadurch gekennzeichnet, daß mindestens eine Nut (113, 213, 313) in einem
   Abstand von der hinteren Stirnfläche (114) des Einspannschaftes (12,112,212,312) endet und mit dieser Stirnfläche durch eine Einführnut (15,115,215,315) verbunden ist, deren Querschnitt kleiner ist als der Querschnitt der Nut, und daß bei maximal geöffneter Werkzeugaufnahme die Backen (22,122,222,322) noch so tief
   in den Backenträgerhohlraum (326) eingreifen, daß
   zum Einsetzen des Einspannschaftes in die Werkzeugaufnahme der Querschnitt der Einführnut den Querschnitt
   des in den Hohlraum eingreifenden Backenteiles umfaßt.

9. Bohrvorrichtung nach Anspruch 8, dadurch gekennzeichnet, daß mindestens ein zweiter Bohrer vorhanden ist,
   dessen Einspannschaft (412,512) dünner ist als derjenige
   des ersten Bohrers, daß jede Backe (22,122,222,322)
   eine dem Hohlraum (326) des Backenhalters (325) zugekehrte Stirnfläche (21,121,221,321) aufweist und daß
   am Einspannschaft (412,512) Anlageflächen (416,516)
   für die flächige Anlage der Stirnflächen der Backen
   durch Verformung des ursprünglich zylindrischen Einspannschaftes gebildet sind.

10. Bohrvorrichtung nach Anspruch 8 oder 9, dadurch gekennzeichnet, daß die Stirnfläche (21,121,221,321)
    der Backe (22,122,222,322) durch eine sich axial zum
    Hohlraum (326) erstreckende Rippe (20,120,220,320)
    unterbrochen ist und daß jede Nut (13,113,213,313)
    des Einspannschaftes (112,212,312)Seitenflächen (18,
    218,318) und einen Boden aufweist, in dem eine sich
    längs der Nut erstreckende Rinne (117,217,317) für
    den Eingriff der Rippe vorhanden ist.

11. Bohrvorrichtung nach einem der Ansprüche 8 bis 10,
    dadurch gekennzeichnet, daß der Boden der Nut (113,213,313)
    für die flächige Anlage an die Stirnfläche (21,121)der
    Backe (22,122) dieser Stirnfläche angepaßt ist.

12. Bohrvorrichtung nach einem der Ansprüche 8 bis 10,
dadurch gekennzeichnet, daß die Stirnfläche der Backe
zylindrisch ist.

13. Bohrer für Handbohrmaschinen mit einem in die Werkzeugaufnahme der Bohrmaschine einspannbaren Einspannschaft,
der mindestens zwei axial verlaufende Nuten (113,213,313)
für den formschlüssigen Eingriff von Mitnehmern der
Werkzeugaufnahme aufweist, dadurch gekennzeichnet,daß
im Boden jeder Nut eine Rille (117,217,317) vorhanden
ist.

14. Bohrer nach Anspruch 13, dadurch gekennzeichnet,
daß die beiden Seitenwände (218)jeder Nut (213) in
den Schenkelebenen eines radial nach außen offenen
Raumwinkels von 180° : n liegen, wenn n die Anzahl
der jeweils um 180° : n gegeneinander versetzten
Nuten ist.

15. Bohrer nach Anspruch 13, dadurch gekennzeichnet,
daß mindestens die beim Bohren das Drehmoment der
Werkzeugaufnahme aufnehmende Seitenwand (118,318)
jeder Nut (113,313) in einer Radialebene des Einspannschaftes (112,312) liegt oder gegenüber dieser um
ihre radial äußere Begrenzung in einer der Umlaufrichtung des Bohrers entgegengesetzten Drehrichtung geneigt
ist.

16. Bohrer für Handbohrmaschinen mit einem in die Werkzeugaufnahme der Bohrmaschine einspannbaren Einspannschaft,
der mindestens zwei axial verlaufende Nuten (113,213,313)
für den formschlüssigen Eingriff von Mitnehmern der
Werkzeugaufnahme aufweist, dadurch gekennzeichnet,daß
mindestens eine Nut (13,113,213,313) in einem Abstand
von der hinteren Stirnfläche (14,114) des Einspannschaftes (12,112,212,312,412,512) endet und mit dieser
Stirnfläche durch eine Einführnut (15,115,215,315) verbunden ist, deren Querschnitt kleiner, vorzugsweise
flacher ist als der Querschnitt der Nut.

17. Bohrer nach Anspruch 16, dadurch gekennzeichnet,
daß der Querschnitt der Einführnut (15,115,215,315)
mindestens den Querschnitt des Bodenteiles der Nut
(13,113,213,313) umfaßt oder mit diesem Querschnitt
im wesentlichen kongruent ist.

18. Bohrersatz, bestehend aus Bohrern mit verschieden
dicken Einspannschäften (112,212,312,412,512), dadurch
gekennzeichnet, daß die dickeren Einspannschäfte
(112,212,312) mindestens zwei sich axial erstreckende
Nuten (113,213,313) für den Eingriff von Mitnehmern
der Werkzeugaufnahme aufweisen und daß die dünneren
Einspannschäfte (412,512) mit zur Achse der Einspannschäfte nicht konzentrischen Anlageflächen (416,516)
versehen sind.

19. Bohrersatz nach Anspruch 17, dadurch gekennzeichnet,
daß die Anlageflächen (416,516) bei den Bohrern des
Satzes zur Anpassung an gleichbleibende Stirnflächen
(321) der Mitnehmer der Werkzeugaufnahme gleich geformt
sind.

20. Bohrersatz nach Anspruch 18 oder 19, dadurch gekennzeichnet, daß die dickeren Einspannschäfte (112,212,312),
mindesztens der dickste Einspannschaft, einen zylindrischen Umfang und mindestens zwei Nuten (113,213,313)
aufweisen.

21. Bohrersatz nach einem der Ansprüche 18 bis 20, dadurch
gekennzeichnet, daß im Boden der Nuten (113,213,313)
der dickeren Einspannschäfte (112,212,312), mindestens
des dicksten Einspannschaftes, eine Rille (117,217,317)
vorhanden ist und daß der Querschnitt der Nuten (13)
der dünneren Einspannschäfte (12,412,512) im wesentlichen mindestens dem Querschnitt des Bodenteiles der
Rille (117,217,317) des dicksten Einspannschaftes
(112,212,312) kongruent ist.

22. Bohrersatz nach einem der Ansprüche 18 bis 21, dadurch gekennzeichnet, daß die beiden Seitenwände (118,218, 318) der Nuten (113,213,313) miteinander gleiche Winkel bilden und daß die Abstände der radial inneren Begrenzungen der Seitenwände voneinander bei allen diesen Bohrern gleich groß sind.

23. Bohrersatz nach einem der Ansprüche 21 oder 22, dadurch gekennzeichnet, daß bei jedem Bohrer des Satzes mindestens eine Nut (13,113,213,313) in einem Abstand von der hinteren Stirnfläche (14,114) des Einspannschaftes (12,112,312,412,512) endet und mit dieser Stirnfläche durch eine Einführnut (15,115,215,315) verbunden ist, deren Querschnitt kleiner ist als der Querschnitt der Nut und bei den dickeren Einspannschäften (112.212.312), mindestens beim dicksten Einspannschaft, im wesentlichen dem Querschnitt des Bodenteiles der Nut entspricht oder mit diesem im wesentlichen kongruent ist und deren Querschnitt bei den dünneren Einspannschäften (12,412,512), mindestens beim dünnsten Einspannschaft, nur den Querschnitt der Rille (117,217,317) umfaßt oder mit diesem kongruent ist.

- . -

Fig.1

Fig.2

## Fig. 3

## Fig. 4

## Fig. 5

Fig. 6

Fig. 7